(19) Europäisches Patentamt
European Patent Office
Office européen des brevets

(11) **EP 3 994 047 B1**

(12) **EUROPÄISCHE PATENTSCHRIFT**

(45) Veröffentlichungstag und Bekanntmachung des Hinweises auf die Patenterteilung:
**03.04.2024   Patentblatt 2024/14**

(21) Anmeldenummer: **20758213.1**

(22) Anmeldetag: **19.08.2020**

(51) Internationale Patentklassifikation (IPC):
**B62D 13/00** (2006.01)      **B62D 13/04** (2006.01)

(52) Gemeinsame Patentklassifikation (CPC):
**B62D 13/00; B62D 13/04;** B62D 13/06

(86) Internationale Anmeldenummer:
**PCT/EP2020/073241**

(87) Internationale Veröffentlichungsnummer:
**WO 2021/058203 (01.04.2021 Gazette 2021/13)**

(54) **VERFAHREN UND VORRICHTUNG ZUM OPTIMIERTEN NACHFÜHREN EINES MEHRACHSIGEN ANHÄNGERS HINTER EINEM ZUGFAHRZEUG**

METHOD AND DEVICE FOR THE OPTIMIZED ADJUSTMENT OF A MULTI-AXLE TRAILER BEHIND A TRACTOR VEHICLE

PROCÉDÉ ET DISPOSITIF POUR L'AJUSTEMENT OPTIMISÉ D'UNE REMORQUE À ESSIEUX MULTIPLES DERRIÈRE UN VÉHICULE TRACTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2019   DE 102019006684**

(43) Veröffentlichungstag der Anmeldung:
**11.05.2022   Patentblatt 2022/19**

(73) Patentinhaber: **Hydac Software GmbH**
**66280 Sulzbach/Saar (DE)**

(72) Erfinder:
• **KOMMA, Georg**
  **66386 St. Ingbert (DE)**
• **KIEFER, Timo**
  **66740 Saarlouis (DE)**
• **KOHL, Peter**
  **66440 Blieskastel (DE)**
• **SEMA, Alexander Johannes**
  **66987 Thaleischweiler-Fröschen (DE)**
• **ARAND, Jan**
  **66701 Beckingen (DE)**

(74) Vertreter: **Bartels und Partner, Patentanwälte**
**Lange Strasse 51**
**70174 Stuttgart (DE)**

(56) Entgegenhaltungen:
**EP-B1- 2 145 813     DE-A1-102015 206 689**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 994 047 B1

## Beschreibung

Die Erfindung betrifft ein Verfahren sowie eine zugehörige Vorrichtung zum optimierten Nachführen eines mehrachsigen Anhängers hinter einem Zugfahrzeug, mit den Merkmalen im Oberbegriff des Anspruchs 1 bzw. 8.

Aus EP 1 081 020 B1 ist ein Verfahren und eine Vorrichtung zur Nachführung eines einachsigen Anhängers bekannt, der hinter einem Traktor mittels einer Knickdeichsel oder mit einer Achsschenkel-Lenkdeichsel gelenkig an einem Zugmaul angehängt ist. Ein Deichselgelenk wird mit dem von einer Regelvorrichtung angesteuerten Aktor derart winkelstellend geregelt angesteuert, dass der Anhänger bei einer Kurvenfahrt möglichst exakt dem Traktor folgt. Dafür werden der Regelvorrichtung ein traktorseitiges Winkelmesssignal, ein anhängerseitiges Winkelmesssignal und ein Wegsignal eines Wegsignalgebers zugeführt. Aus den Winkelmesssignalen und dem Wegsignal wird jeweils ein Soll-Deichselgelenkwinkel für eine geregelte Einstellung des Deichselgelenkwinkels mit dem Aktor errechnet.

Um den Radius des zu ziehenden Fahrzeuges zu bestimmen, ist auf dem zu ziehenden Fahrzeug ein Gyroskop installiert, das ein analoges Signal abgibt, das direkt proportional zur Winkelgeschwindigkeit des Traktors in der Horizontalebene ist. Mit Hilfe der über den Wegsignalgeber gewonnenen Geschwindigkeit, kann der jeweilige eingeschlagene Radius ermittelt werden und somit als ein von den Deichselwinkeln unabhängiges Eingangssignal für die Steuerung dienen.

Aus EP 2 145 813 B1 ist ein Verfahren und eine Vorrichtung zur Lenkung eines Anhängers bekannt, der an ein Zugfahrzeug gelenkig angehängt ist und drei Achsen aufweist, von denen zwei lenkbar sind. Auf dem Zugfahrzeug ist ein Gyroskop zur Ermittlung der Winkelgeschwindigkeit des Zugfahrzeugs und auf dem Anhänger sind Sensoren zur Ermittlung der Bahngeschwindigkeit des Anhängers angeordnet, von denen jeweils die Rad-Drehzahl eines der Räder des Anhängers ermittelt wird. Aus der Winkelgeschwindigkeit des Zugfahrzeugs und der Bahngeschwindigkeit des Anhängers wird der Kurvenradius des Anhängers ermittelt, in Abhängigkeit dessen mittels einer Steuereinrichtung der Lenkeinschlag der lenkbaren Anhänger-Achsen derart gesteuert wird, dass der Kurvenmittelpunkt des Anhängers auf der Verlängerung der starren Achse liegt. Die Berechnung des Einschlagwinkels erfolgt über allgemein bekannte "Dreiecksrechnungen".

Für eine Steuerung des Anhängers bei einer Rückwärtsfahrt wird zusätzlich die Winkelgeschwindigkeit des Anhängers ermittelt. Tritt beim Rückwärtsfahren eine Fahrsituation auf, bei der das Zugfahrzeug und der Anhänger entgegengesetzte Winkelgeschwindigkeiten aufweisen, also zu entgegengesetzten Seiten einschlagen, wird lediglich die Winkelgeschwindigkeit des Anhängers berücksichtigt.

Die DE 10 2015 206 689 A1 offenbart ein Verfahren zum optimierten Nachführen eines mehrachsigen Anhängers hinter einem Zugfahrzeug, die mittels einer lösbaren Koppeleinrichtung miteinander verbunden werden, wobei mittels mindestens einer auf dem Anhänger angeordneten Sensoreinrichtung als Sensorwerte die Winkelgeschwindigkeit sowie die Bahngeschwindigkeit des Anhängers ermittelt werden.

Der Erfindung liegt die Aufgabe zugrunde, das letztgenannte bekannte Verfahren und die zugehörige Vorrichtung dahingehend weiter zu verbessern, dass der jeweilige Anhänger bei einer an dessen Deichsel angreifenden Kraft, unabhängig von einem jeweiligen Zugfahrzeug, in jedweder Fahrsituation sich selbständig in Abhängigkeit der Richtung der angreifenden Kraft zu lenken vermag.

Eine dahingehende Aufgabe löst ein Verfahren mit den Merkmalen des Patentanspruchs 1 in seiner Gesamtheit.

Gemäß dem kennzeichnenden Teil des Anspruchs 1 ist das erfindungsgemäße Verfahren dadurch gekennzeichnet, dass in Abhängigkeit der Sensorwerte von einer Rechnereinheit ein Bahnradius für den Anhänger errechnet wird, und dass der Bahnradius in einem Winkelverhältnis zu dem Achsabstand zwischen zwei benachbarten Anhängerachsen gesetzt einen Sollwinkel ergibt, in Abhängigkeit dessen mindestens eine Lenkachse des Anhängers angesteuert wird, der insoweit eigensteuerfähig und/oder im Rahmen einer Gespannbildung mit verschiedenen Arten von Zugfahrzeugen koppelbar ist, die insoweit gegenüber den Lösungen im Stand der Technik über keinerlei Sensorik verfügen müssen.

Die dahingehenden Verfahrensschritte stellen also sicher, dass in die Steuerung der jeweiligen lenkbaren Achse des Anhängers lediglich Sensorwerte von auf dem Anhänger angeordneten Sensoren einfließen, die ausschließlich Bewegungswerte des Anhängers messen. Dadurch ist der Anhänger unabhängig von einem Zugfahrzeug eigensteuerfähig, nämlich unabhängig von Sensorwerten von auf dem Zugfahrzeug angeordneten Sensoren, die ausschließlich Bewegungswerte des Zugfahrzeuges messen, aus denen Bewegungswerte des Anhängers errechnet werden könnten. Dies hat zum Vorteil, dass ein derart eingerichteter Anhänger unter Aufrechterhaltung seiner Eigensteuerfunktion mit verschiedenen Arten von Zugfahrzeugen nahezu beliebig koppelbar ist.

In einem bevorzugten Ausführungsbeispiel ist vorgesehen, dass die Winkelgeschwindigkeit des Anhängers von einem Drehratensensor und die Bahngeschwindigkeit von mindestens einem Drehzahlsensor an einer Achse, insbesondere einer Starrachse des Anhängers, erfasst werden. Das Vorsehen von zwei Sensoren mit voneinander unabhängigen Messprinzipien, nämlich des eines Drehzahlsensors zusätzlich zu dem Drehratensensor, erhöht die Genauigkeit des ermittelten Sollwinkels, weil sich lediglich einen Sensor betreffende Messfehler nur auf diesen Sensor, also die Winkelge-

3          EP 3 994 047 B1          4

schwindigkeit oder die Bahngeschwindigkeit, auswirken. Als Drehratensensor kommt bevorzugt die Produktgruppe HIT der Schutzrechtsinhaberin zum Einsatz.

In einem weiteren bevorzugten Ausführungsbeispiel ist vorgesehen, dass mit nur einer Sensoreinrichtung des Anhängers dessen Winkelgeschwindigkeit sowie dessen Bahngeschwindigkeit ermittelt werden, indem aus Beschleunigungswerten des Anhängers auf dessen Geschwindigkeit rückgerechnet wird. Gegenüber dem Vorsehen von mindestens zwei Sensoren werden sämtliche Kosten, die mit dem zweiten Sensor bzw. den weiteren Sensoren in Zusammenhang stehen, eingespart, bspw. die Anschaffung, die Montage und die Kalibrierung.

In einem weiteren bevorzugten Ausführungsbeispiel ist vorgesehen, dass mit der einen Sensoreinrichtung des Anhängers die momentane Neigung desselben festgestellt wird. Unter der Neigung des Anhängers wird vorliegend ein Rollen des Anhängers um seine Längsachse verstanden, wobei der Neigungswinkel eines Anhängers, dessen Boden im Wesentlichen parallel zum Untergrund angeordnet ist, Null beträgt. Durch die Auswertung eines dahingehenden Neigungswinkels kann ein drohendes Kippen des Anhängers ermittelt werden und somit der Anhänger hinsichtlich seiner Sicherheit verbessert werden.

In einem weiteren bevorzugten Ausführungsbeispiel ist vorgesehen, dass der Anhänger drei Achsen aufweist, von denen die mittlere Achse als Starrachse konzipiert ist und die beiden anderen Achsen mittels mindestens eines Lenkmotors in Abhängigkeit von dem vorgegebenen Sollwinkel gelenkt werden. Das Vorsehen von mehr als einer gelenkten Achse verbessert bei gleichbleibender Eigensteuerfähigkeit des Anhängers die Tragfähigkeit des Anhängers.

In einem weiteren bevorzugten Ausführungsbeispiel ist vorgesehen, dass bei einer Kurvenfahrt die Drehachsen durch die Radmitten der Räder auf einer Seite sämtlicher Anhängerachsen sich in fiktiver Verlängerung in einem Momentanpol schneiden und dass die Verbindung zwischen diesem Momentanpol und einer Verbindungslinie durch die Radmitte des auf der einen Seite der starren Achse des Anhängers angeordneten Rades dem aus dem Winkelverhältnis ermittelten Bahnradius entspricht. Dadurch ist sichergestellt, dass bei Vorsehen von drei Achsen sämtliche Räder auf einer jeweiligen Seite der Achsen derart ausgerichtet sind, dass diese entsprechend eines Lenkeinschlages auf ein und derselben Fahrspur rollen.

In einem weiteren bevorzugten Ausführungsbeispiel ist vorgesehen, dass die Winkelgeschwindigkeit des Anhängers um eine Achse ermittelt wird, die senkrecht auf der Verbindungslinie steht und durch die Radmitte der starren Achse geht, die dem Momentanpol am nächsten ist.

Gemäß Anspruch 8 ist Gegenstand der Erfindung auch eine Vorrichtung zum Durchführen des Verfahrens, wobei ein mehrachsiger Anhänger mit mindestens einer starren und einer lenkbaren Achse mindestens eine Sensoreinrichtung aufweist, die als Sensorwerte die Winkelgeschwindigkeit sowie die Bahngeschwindigkeit des Anhängers ermittelt, wobei mittels einer Rechnereinheit aus den Sensorwerten und dem Achsabstand zwischen zwei benachbart angeordneten Anhängerachsen ein Sollwinkel errechnet wird, der dazu dient, mittels eines Lenkmotors zumindest eine steuerbare Achse des Anhängers für ein optimiertes Nachführen hinter einer Zugmaschine anzusteuern.

Im Folgenden wird das erfindungsgemäße Verfahren zum optimierten Nachführen eines mehrachsigen Anhängers hinter einem Zugfahrzeug anhand der Vorrichtung zur Durchführung dieses Verfahrens näher erläutert. Dabei zeigen in prinzipieller und nicht maßstäblicher Darstellung

Fig. 1   eine schematische Darstellung eines mit einem Zugfahrzeug gekoppelten dreiachsigen Anhängers, der mit der erfindungsgemäßen Vorrichtung ausgestattet ist; und

Fig. 2   eine schematische Darstellung der jeweiligen Räder des Anhängers während einer Kurvenfahrt, die auf der der Kurveninnenseite zugewandten Seite der Anhängerachsen in Hintereinanderordnung vorhanden sind, mit eingezeichneten, für die Berechnung eines Soll-Lenkwinkels wesentlichen Parametern.

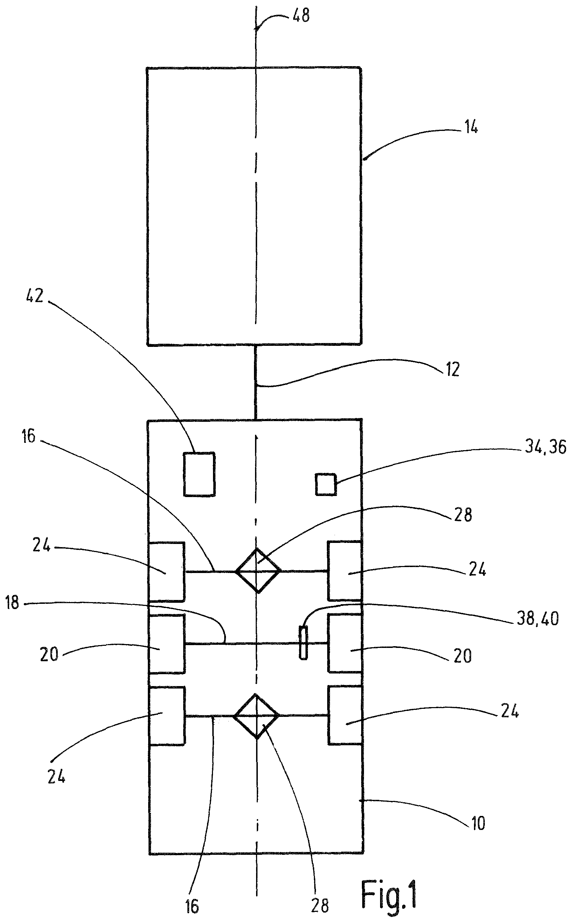

Die Fig. 1 zeigt während einer Geradeausfahrt (vorwärts oder rückwärts) einen Anhänger 10, der mit einer erfindungsgemäßen Vorrichtung versehen ist und der mittels einer lösbaren, starr koppelbaren Koppeleinrichtung 12 an ein Zugfahrzeug 14 angehängt ist. Der Anhänger 10 ist dreiachsig ausgebildet, weist nämlich zwischen zwei lenkbaren Achsen 16 eine unlenkbare, starre Achse 18 auf, die allesamt zueinander parallel ausgerichtet sind. Die Abstände $l$ zwischen der starren Achse 18 und der jeweiligen lenkbaren Achse 16 entsprechen einander. An den beiden freien Enden der starren Achse 18 ist gelenkfrei jeweils ein drehbares Rad 20 angebracht, so dass die starre Achse 18 während einer Geradeausfahrt oder einer Kurvenfahrt der Drehachse 22 der Räder 20 der starren Achse 18 entspricht. An den beiden freien Enden jeder lenkbaren Achse 16 ist jeweils über eine in den Figuren nicht gezeigte Gelenkstelle ein drehbares Rad 24 angelenkt, so dass die jeweilige lenkbare Achse 16 lediglich während einer Geradeausfahrt der Drehachse 26 der Räder 24 dieser lenkbaren Achse 16 entspricht und während einer Kurvenfahrt in einem Winkel von ungleich 0 oder 180 Grad zu der Drehachse 26 der Räder 24 dieser lenkbaren Achse 16 ausgerichtet ist. Zum Ansteuern des Lenkwinkels $\gamma$ bzw. des Lenkeinschlags der Räder 24 der lenkbaren Achsen 16 ist für jede lenkbare Achse 16 ein Lenkmotor 28 vorgesehen, der über ein in den Figuren nicht dargestelltes Lenkgestänge zwecks Änderung des Lenkwinkels $\gamma$ auf die Rä-

3

der 24 der jeweiligen lenkbaren Achse 16 in üblicher und daher nicht beschriebener Weise einwirken kann.

Bei der in Fig. 1 gezeigten Geradeausfahrt beträgt der Lenkwinkel $\gamma$ zwischen einer Ebene 30, die senkrecht zu einer Drehachse 22 eines Rades 20 der starren Achse 18 ausgerichtet ist, und einer weiteren Ebene 32, die senkrecht zu einer Drehachse 26 eines Rades 24 einer der lenkbaren Achsen 16 ausgerichtet ist, Null Grad, weil die beiden Ebenen 30, 32 bei einer Geradeausfahrt ineinander liegen.

Die Vorrichtung weist eine an dem Anhänger 10 angeordnete Sensoreinrichtung 34 in Form eines Drehratensensors 36 zum Ermitteln der Winkelgeschwindigkeit $\dot{\psi}_{An}$ des Anhängers 10 auf. Weiterhin ist Teil der Vorrichtung eine an dem Anhänger 10 angeordnete weitere Sensoreinrichtung 38 in Form eines gegenüber dem Drehratensensor 36 separat handelbaren Drehzahlsensors 40 zum Ermitteln der Bahngeschwindigkeit $v_{An}$ des Anhängers 10. Dazu erfasst der Drehzahlsensor 40 die Drehzahl der starren Achse 18 des Anhängers 10 oder die Drehzahl eines Rades 20 dieser Achse 18. Der Drehratensensor 36 und der Drehzahlsensor 40 sind mit entsprechenden Eingängen einer Rechnereinheit 42 zur Verarbeitung und Auswertung der Messwerte elektrisch verbunden, die ausgangsseitig mit jedem Lenkmotor 28 der lenkbaren Achsen 16 zu dessen Ansteuerung elektrisch verbunden ist.

Die Bahngeschwindigkeit $v_{An}$ des Anhängers 10 kann auch unter Verwendung eines Satellitennavigationssystems, wie beispielsweise GPS, in Verbindung mit einer Initial Measurement Unit (IMU) (Magnetometer) ermittelt werden. Ferner kann die Bahngeschwindigkeit $v_{An}$ des Anhängers 10 von außen eingegeben werden, bspw. über das Zugfahrzeug. Weitere Messprinzipien zur Bestimmung der Geschwindigkeit sind möglich (Korrelation, optisch usw.). Auch kann die Geschwindigkeit über eine Integration von Beschleunigungswerten ermittelt werden.

Alternativ kann anstatt der beiden Sensoreinrichtungen 34, 38 lediglich eine einzige Sensoreinrichtung zum Ermitteln der Winkelgeschwindigkeit $\dot{\psi}_{An}$ und der Bahngeschwindigkeit $v_{An}$ vorgesehen sein, die als eine handelbare Baueinheit ausgebildet ist und mittels der zumindest die Winkelgeschwindigkeit $\dot{\psi}_{An}$ um eine Vertikalachse des Anhängers 10 und die Beschleunigung des Anhängers 10 bei dessen Fahrbewegung messbar ist. Dabei kann durch eine Integration der Beschleunigungsmesswerte die Bahngeschwindigkeit $v_{An}$ des Anhängers 10 ermittelt werden.

Bei Vorsehen eines Drehratensensors 36 und eines von diesem unabhängigen Drehzahlsensors 40 kann der Drehratensensor 36 oder bei Vorsehen lediglich einer einzigen Sensoreinrichtung kann diese als das Produkt "HIT 1000" oder "HIT 1500" der HYDAC GmbH ausgebildet sein, das einen Beschleunigungs- und einen zusätzlichen Drehratensensor auf MEMS(Micro-Electro-Mechanical System)-Basis in einer handelbaren Einheit aufweist.

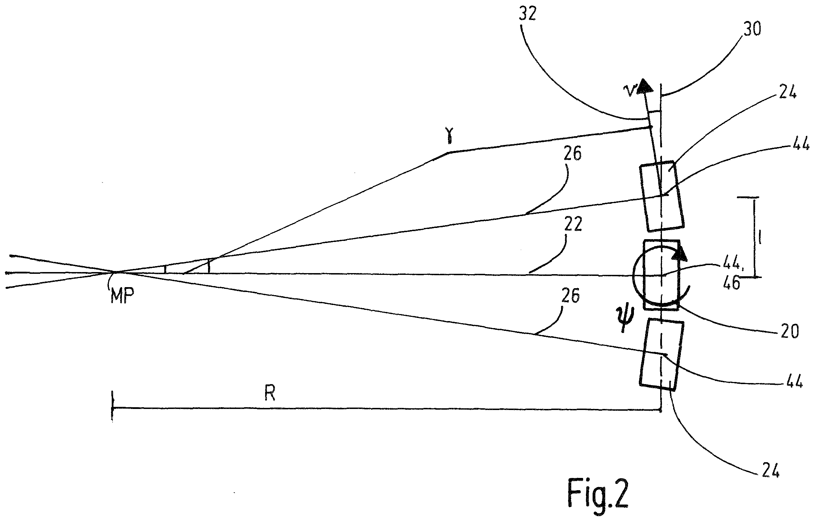

Fig. 2 zeigt schematisch während einer Kurvenfahrt die einer Kurveninnenseite zugewandten Räder 20, 24 sämtlicher drei Anhängerachsen 16, 18. Bei einer solchen Kurvenfahrt des Anhängers 10 weicht der Lenkwinkel $\gamma$ der Räder 24 der lenkbaren Achsen 16 von Null Grad ab. Dabei entspricht der Lenkwinkel $\gamma$ eines Rades 24 einer lenkbaren Achse 16, das auf einer Achsenseite angeordnet ist, dem mit -1 multiplizierten Lenkwinkel $\gamma$ eines auf der entsprechenden Achsenseite angeordneten Rades 24 der anderen lenkbaren Achse 16. Zudem schneiden sich bei einer Kurvenfahrt die jeweiligen fiktiven Verlängerungen der Drehachsen 22, 26 durch die Radmitten 44 der Räder 20, 24 sämtlicher Anhängerachsen 16, 18, die der Kurveninnenseite nächstliegend sind, unabhängig von dem Lenkeinschlag der Räder 24 der lenkbaren Achsen 16, in einem Momentanpol MP. Der Momentanpol MP ist in jedem Fall ein Punkt auf der fiktiven Verlängerung der starren Achse 18 in Richtung des Kurveninneren und ist bei Fahrt einer steilen Kurve, also bei einem relativ großen Lenkwinkel $\gamma$, näher an dem Anhänger 10 angeordnet als bei einer Fahrt einer flachen Kurve, also bei einem demgegenüber kleineren Lenkwinkel $\gamma$.

Zum optimierten Nachführen des Anhängers 10 hinter dem Zugfahrzeug 14 wird von der Rechnereinheit 42 in einem ersten Schritt ein Quotient aus der Bahngeschwindigkeit $v_{An}$ des Anhängers 10 und der Winkelgeschwindigkeit $\dot{\psi}_{An}$ des Anhängers 10 gebildet, woraus sich der Bahnradius $R_{An}$ des Anhängers 10 ergibt. Dazu wird die Winkelgeschwindigkeit $\dot{\psi}_{An}$ des Anhängers 10 von dem Drehratensensor 36 um eine Achse ermittelt, die durch einen Radmittelpunkt 46 der starren Achse 18 verlaufend, in Vertikalrichtung senkrecht auf der Drehachse 22 desjenigen Rades 20 steht, das dem Momentanpol MP oder der Kurveninnenseite nächstliegend ist. In einem zweiten Schritt wird ein Quotient aus dem Achsabstand $l$ zwischen zwei benachbarten Anhängerachsen 16, 18 und dem Bahnradius $R_{An}$ des Anhängers 10 gebildet, dessen Arkustangens-Winkelfunktion einen Soll-Lenkwinkel $\gamma$ ergibt. In Abhängigkeit des Soll-Lenkwinkels $\gamma$ wird der jeweilige Lenkmotor 28 der beiden lenkbaren Achsen 16 derart angesteuert, dass der Anhänger 10 bei einer an dessen Deichsel angreifenden Kraft, unabhängig von einem jeweiligen Zugfahrzeug 14, in jedweder Fahrsituation sich selbstständig in Abhängigkeit der Richtung der angreifenden Kraft lenkt. Eine derartige Kraft kann bei einer Vorwärtsfahrt des Zugfahrzeuges 14 eine Zugkraft und bei einer Rückwärtsfahrt des Zugfahrzeuges 14 eine Druckkraft sein.

Im Folgenden werden die beiden Rechenschritte anhand von Formeln dargestellt:
Schritt 1:

$$R_{An} = \frac{v_{An}}{\dot{\psi}_{An}}$$

Schritt 2:

$$\gamma = \tan^{-1} \frac{l}{R_{An}}$$

Dabei beschreiben $v_{An}$ die Bahngeschwindigkeit des Anhängers 10, $\dot{\psi}_{An}$ die Drehrate bzw. die Winkelgeschwindigkeit des Anhängers 10 um eine Vertikalachse, $R_{An}$ den Bahnradius des Anhängers 10, *l* den Abstand zwischen zwei benachbarten Achsen 16, 18 und $\gamma$ den Soll-Lenkwinkel zwischen der Ebene 30, die senkrecht zu einer Drehachse 22 eines Rades 20 der starren Achse 18 ausgerichtet ist, und einer weiteren Ebene 32, die senkrecht zu einer Drehachse 26 eines Rades 24 einer der lenkbaren Achsen 16 ausgerichtet ist.

Die Verbindungsstrecke zwischen dem Momentanpol MP bis zu dem Radmittelpunkt 46 des auf der Kurveninnenseite der starren Achse 18 des Anhängers 10 angeordneten Rades 20 entspricht dabei dem aus dem Winkelverhältnis ermittelten Bahnradius $R_{An}$.

Zusätzlich kann ein durch den Drehratensensor 36 ermittelter Neigungswinkel um die Längsachse 48 des Anhängers 10 herangezogen werden, um ein drohendes Kippen des Anhängers 10 um diese Achse 48 zu ermitteln und entsprechend in die Fahrt oder den Lenkvorgang einzugreifen, um ein derartiges Kippen des Anhängers 10 zu verhindern.

Ein mit der voranstehenden Vorrichtung ausgestatteter Anhänger 10 ist unabhängig von dem Zugfahrzeug 14 eigensteuerfähig, nämlich unabhängig von Sensorwerten von auf dem Zugfahrzeug 14 angeordneten Sensoren, die ausschließlich Bewegungswerte des Zugfahrzeuges 14 messen. Dies hat den Vorteil, dass ein derart eingerichteter Anhänger 10 unter Aufrechterhaltung seiner Eigensteuerfunktion mit verschiedenen Arten von Zugfahrzeugen 14 im Rahmen einer nahezu beliebigen Gespannbildung koppelbar ist. Der Anhänger 10 weist in der Minimalausstattung zwei Achsen (Tandem) auf, von denen eine lenkbar sein muss. Bei Einsatz von drei oder mehr Achsen ist bevorzugt eine Achse starr und die anderen als Lenkachsen lenkbar konzipiert, wobei die Lenkachsen auch allesamt in Fahrtrichtung des Hängers 10 gesehen vor und hinter den Starrachsen angeordnet sein können. Ferner kann der Abstand zwischen den Achsen in vorgebbarem Rahmen beliebig gewählt werden.

**Patentansprüche**

1. Verfahren zum optimierten Nachführen eines mehrachsigen Anhängers (10) hinter einem Zugfahrzeug (14), die mittels einer lösbaren, starr koppelbaren Koppeleinrichtung (12) miteinander verbunden werden, wobei mittels mindestens einer auf dem Anhänger (10) angeordneten Sensoreinrichtung (34, 38) als Sensorwerte die Winkelgeschwindigkeit ($\dot{\psi}_{An}$) sowie die Bahngeschwindigkeit ($v_{An}$) des Anhängers (10) ermittelt werden, **dadurch gekennzeichnet, dass** in Abhängigkeit dieser Sensorwerte von einer Rechnereinheit (42) ein Bahnradius ($R_{An}$) für den Anhänger (10) errechnet wird, und dass der Bahnradius ($R_{An}$) in einem Winkelverhältnis zu dem Achsabstand (*l*) zwischen zwei benachbarten Anhängerachsen (16, 18) gesetzt einen Sollwinkel ($\gamma$) ergibt, in Abhängigkeit dessen mindestens eine Lenkachse (16) des Anhängers (10) angesteuert wird, der insoweit eigensteuerfähig und/oder im Rahmen einer Gespannbildung mit verschiedenen Arten von Zugfahrzeugen (14) koppelbar ist.

2. Verfahren nach Anspruch 1, **dadurch gekennzeichnet, dass** die Winkelgeschwindigkeit ($\dot{\psi}_{An}$) des Anhängers (10) von einem Drehratensensor (36) und die Bahngeschwindigkeit ($v_{An}$) von mindestens einem Drehzahlsensor (40) an einer Achse (18), insbesondere einer Starrachse (18) des Anhängers (10), erfasst werden.

3. Verfahren nach Anspruch 1 oder 2, **dadurch gekennzeichnet, dass** mit nur einer Sensoreinrichtung des Anhängers (10) dessen Winkelgeschwindigkeit ($\dot{\psi}_{An}$) sowie dessen Bahngeschwindigkeit ($v_{An}$) ermittelt werden, indem aus Beschleunigungswerten des Anhängers (10) auf dessen Geschwindigkeit rückgerechnet wird.

4. Verfahren nach einem der vorstehenden Ansprüche, **dadurch gekennzeichnet, dass** mit der einen Sensoreinrichtung (36) des Anhängers (10) die momentane Neigung desselben festgestellt wird.

5. Verfahren nach einem der vorstehenden Ansprüche, **dadurch gekennzeichnet, dass** der Anhänger (10) mindestens eine starre (18) und eine lenkbare (16) Achse, vorzugsweise drei Achsen (16, 18), aufweist, von denen die mittlere Achse als Starrachse (18) konzipiert ist und die beiden anderen Achsen (16) mittels mindestens eines Lenkmotors (28) in Abhängigkeit von dem vorgegebenen Sollwinkel (y) gelenkt werden.

6. Verfahren nach Anspruch 5, **dadurch gekennzeichnet, dass** bei einer Kurvenfahrt die Drehachsen (22, 26) durch die Radmitten (44) der Räder (20, 24) auf einer Seite sämtlicher Anhängerachsen (16, 18) sich in fiktiver Verlängerung in einem Momentanpol (MP) schneiden und dass die Verbindung zwischen diesem Momentanpol (MP) und einer Verbindungslinie durch die Radmitte (44) des auf der einen Seite der starren Achse (18) des Anhängers (10) angeordneten Rades (20) dem aus dem Winkelverhältnis ermittelten Bahnradius ($R_{An}$) entspricht.

7. Verfahren nach Anspruch 6, **dadurch gekennzeichnet, dass** die Winkelgeschwindigkeit ($\dot{\psi}_{An}$) des Anhängers (10) um eine Achse ermittelt wird, die senkrecht auf der Verbindungslinie steht und durch die Radmitte (44) der starren Achse (18) geht, die dem Momentanpol (MP) am nächsten ist.

8. Vorrichtung zum Durchführen eines Verfahrens nach einem der vorstehenden Ansprüche, mit einem mehrachsigen Anhänger (10) mit mindestens einer starren (18) und einer lenkbaren (16) Achse und mindestens einer Sensoreinrichtung (34, 38), die als Sensorwerte die Winkelgeschwindigkeit ($\dot{\psi}_{An}$) sowie die Bahngeschwindigkeit ($\upsilon_{An}$) des Anhängers (10) ermittelt, **dadurch gekennzeichnet, dass** mittels einer Rechnereinheit (42) aus den Sensorwerten und dem Achsabstand (*l*) zwischen zwei benachbart angeordneten Anhängerachsen (16, 18) ein Sollwinkel ($\gamma$) errechnet wird, der dazu dient, mittels eines Lenkmotors (28) zumindest eine steuerbare Achse (16) des Anhängers (10) für ein optimiertes Nachführen hinter einer Zugmaschine (14) anzusteuern.

9. Vorrichtung nach Anspruch 8, **dadurch gekennzeichnet, dass** mittels nur einer Sensoreinrichtung auf dem Anhänger (10) die Winkelgeschwindigkeit ($\dot{\psi}_{An}$) ermittelt wird, vorzugsweise zusätzlich dessen Bahngeschwindigkeit ($\upsilon_{An}$) und/oder dessen Neigung.

**Claims**

1. Method for optimised tracking of a multi-axle trailer (10) behind a towing vehicle (14), which are connected to one another by means of a detachable coupling device (12) that can be rigidly coupled, wherein the angular velocity ($\dot{\psi}_{An}$) and the path velocity ($\upsilon_{An}$) of the trailer (10) are established as sensor values by means of at least one sensor apparatus (34, 38) arranged on the trailer (10), **characterised in that** a path radius ($R_{An}$) for the trailer (10) is calculated by a computer unit (42) as a function of these sensor values, and **in that** the path radius ($R_{An}$), placed in an angular relationship to the axle distance (I) between two adjacent trailer axles (16, 18), gives a target angle ($\gamma$) as a function of which at least one steering axle (16) of the trailer (10) is actuated, which can accordingly be connected in a self-controllable manner and/or as part of a vehicle-trailer formation to various types of towing vehicles (14).

2. Method according to claim 1, **characterised in that** the angular velocity ($\dot{\psi}_{An}$) of the trailer (10) is recorded by a rotation rate sensor (36) and the path velocity ($\upsilon_{An}$) is recorded by at least one speed sensor (40) on one axle (18), in particular a rigid axle (18) of the trailer (10).

3. Method according to either claim 1 or claim 2, **characterised in that** the angular velocity ($\dot{\psi}_{An}$) and the

path velocity ($\upsilon_{An}$) of the trailer (10) can be established with only one sensor apparatus on said trailer (10) by back-calculating the velocity of the trailer (10) from acceleration values of the trailer (10).

4. Method according to any of the preceding claims, **characterised in that** the tilt of the trailer (10) at any moment in time can be determined by one sensor apparatus (36) of said trailer (10).

5. Method according to any of the preceding claims, **characterised in that** the trailer (10) comprises at least one rigid (18) and one steerable (16) axle, preferably three axles (16, 18), of which the middle axle is designed as a rigid axle (18) and the two other axles (16) can be steered by at least one steering motor (28) as a function of the specified target angle ($\gamma$).

6. Method according to claim 5, **characterised in that**, when cornering, the axes of rotation (22, 26) intersect the wheel centres (44) of the wheels (20, 24) on one side of all trailer axles (16, 18) in fictitious extension in an instantaneous centre of rotation (MP), and **in that** the connection between this instantaneous centre of rotation (MP) and a connecting line through the wheel centre (44) of the wheel (20) arranged on one side of the rigid axle (18) of the trailer (10) corresponds to the path radius ($R_{An}$) established from the angular relationship.

7. Method according to claim 6, **characterised in that** the angular velocity ($\dot{\psi}_{An}$) of the trailer (10) is established around an axis which is perpendicular to the connecting line and passes through the wheel centre (44) of the rigid axle (18) that is closest to the instantaneous centre of rotation (MP).

8. Device for carrying out a method according to any of the preceding claims, having a multi-axle trailer (10) with at least one rigid (18) and one steerable (16) axle and at least one sensor apparatus (34, 38), which establishes the angular velocity ($\dot{\psi}_{An}$) and the path velocity ($\upsilon_{An}$) of the trailer (10) as sensor values, **characterised in that** a target angle ($\gamma$) is calculated by means of a computer unit (42) from the sensor values and the axle distance (*l*) between two adjacently arranged trailer axles (16, 18), said target angle being used to actuate at least one controllable axle (16) of the trailer (10) by means of a steering motor (28) for optimised tracking behind a towing machine (14).

9. Device according to claim 8, **characterised in that** the angular velocity ($\dot{\psi}_{An}$) is established by means of just one sensor apparatus on the trailer (10), preferably along with its path velocity ($\upsilon_{An}$) and/or its tilt.

## Revendications

1. Procédé pour qu'une remorque (10) à plusieurs essieux suive au mieux derrière un véhicule (14) tracteur, qui sont attelés entre eux au moyen d'un dispositif (12) d'attelage pouvant être dételé et pouvant être attelé de manière fixe, dans lequel, au moyen d'au moins un dispositif (34, 38) capteur monté sur la remorque (10), on détermine, comme valeurs du capteur, la vitesse ($\dot{\psi}_{An}$) angulaire, ainsi que la vitesse ($v_{An}$) sur voie de la remorque (10), **caractérisé en ce que**, en fonction des valeurs du capteur, on calcule un rayon ($R_{An}$) de voie pour la remorque (10) par une unité (42) de calcul et **en ce que** le rayon ($R_{An}$) de voie donne, mis dans un rapport angulaire à la distance ($l$) entre deux essieux (16, 18) voisins de la remorque, un angle ($\gamma$) de consigne, en fonction duquel on commande au moins un essieu (16) directeur de la remorque (10) qui, dans cette mesure, peut être attelé en étant apte à une propre commande et/ou, dans le cadre de la formation d'un attelage, peut être attelé à des types différents de véhicules (14) tracteurs.

2. Procédé suivant la revendication 1, **caractérisé en ce que** l'on détecte la vitesse ($\dot{\psi}_{An}$) angulaire de la remorque (10) par un capteur (36) de vitesse angulaire et la vitesse ($v_{An}$) sur voie par au moins un capteur (40) de nombre de tours sur un essieu (18), en particulier un essieu (18) rigide de la remorque (10).

3. Procédé suivant la revendication 1 ou 2, **caractérisé en ce que** l'on détermine, par seulement un dispositif de capteur de la remorque (10), sa vitesse ($\dot{\psi}_{An}$) angulaire, ainsi que sa vitesse ($v_{An}$) sur voie en recalculant à partir de valeurs d'accélération de la remorque (10), sa vitesse.

4. Procédé suivant l'une des revendications précédentes, **caractérisé en ce que**, par le un dispositif (36) capteur de la remorque (10), on en constate l'inclinaison instantanée.

5. Procédé suivant l'une des revendications précédentes, **caractérisé en ce que** la remorque (10) a au moins un essieu rigide (18) et un essieu (16) directeur, de préférence trois essieux (16, 18), dont l'essieu intermédiaire est conçu sous la forme d'un essieu (18) rigide et les deux autres essieux (16) sont dirigés au moyen d'au moins un moteur (28) de direction en fonction de l'angle ($\gamma$) de consigne donné à l'avance.

6. Procédé suivant la revendication 5, **caractérisé en ce que** dans un virage, les axes (22, 26) de rotation passant par les milieux (44) des roues (20, 24), d'un côté de l'ensemble des essieux (16, 18) de la remorque, se coupent suivant un prolongement fictif dans un pôle (MP) instantané et **en ce que** la liaison entre ce pôle (MP) instantané et une ligne de liaison passant par le milieu (44) de la roue (20), montée d'un côté de l'essieu (18) rigide de la remorque (10), correspond au rayon ($R_{An}$) de voie déterminé à partir du rapport angulaire.

7. Procédé suivant la revendication 6, **caractérisé en ce que** l'on détermine la vitesse ($\dot{\psi}_{An}$) angulaire de la remorque (10) autour d'un axe, qui est perpendiculaire à la ligne de liaison et passe par le milieu (44) de roue de l'essieu (18) rigide, qui est le plus proche du pôle (MP) instantané.

8. Dispositif pour effectuer un procédé suivant l'une des revendications précédentes, comprenant une remorque (10) à plusieurs essieux ayant au moins un essieu rigide (18) et un essieu directeur (16) et au moins un dispositif (34, 38) capteur, qui détermine comme valeurs de capteur, la vitesse ($\dot{\psi}_{An}$) angulaire, ainsi que la vitesse ($v_{An}$) sur voie de la remorque (10), **caractérisé en ce qu'**au moyen d'une unité (42) de calcul, on calcule, à partir des valeurs de capteur et de la distance ($l$) entre essieux entre deux essieux (16, 18) voisins de la remorque, un angle ($\gamma$) de consigne, qui sert à commander au moyen d'un moteur (28) de direction au moins un essieu (16) pouvant être commandé de la remorque (10), pour un suivi au mieux derrière une machine (14) de traction.

9. Dispositif suivant la revendication 8, **caractérisé en ce que** l'on détermine, au moyen de seulement un dispositif capteur sur la remorque (10), la vitesse ($\dot{\psi}_{An}$) angulaire, de préférence supplémentairement à sa vitesse ($v_{An}$) sur voie et/ou à son inclinaison.

48

14

42

12

16

34,36

28

24

24

18

38,40

20

20

24

24

16

28

Fig.1

10

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1081020 B1
- EP 2145813 B1
- DE 102015206689 A1